Europäisches Patentamt

European Patent Office

Office européen des brevets

(11) Veröffentlichungsnummer: **0 405 307 A1**

# (12) EUROPÄISCHE PATENTANMELDUNG

(21) Anmeldenummer: 90111604.6

(22) Anmeldetag: 20.06.90

(51) Int. Cl.5: **F16F 1/26**, B60G 11/12

(30) Priorität: 27.06.89 DE 3920926

(43) Veröffentlichungstag der Anmeldung:
02.01.91 Patentblatt 91/01

(84) Benannte Vertragsstaaten:
DE ES FR GB IT SE

(71) Anmelder: BASF Aktiengesellschaft
Carl-Bosch-Strasse 38
D-6700 Ludwigshafen(DE)

(72) Erfinder: Leonhard, Christian
H 2,1
D-6800 Mannheim 1(DE)
Erfinder: Paulus, Wolf-Ruediger
Rosenstrasse 16
D-6800 Neu-Edingen, Post MA 71(DE)
Erfinder: Jakobi, Reinhard, Dr.
Sohlstrasse 13
D-6701 Maxdorf(DE)
Erfinder: Schuermann, Helmut
Burgunderstrasse 13
D-6701 Maxdorf(DE)

(54) Blattfeder aus Faserverbundwerkstoff.

(57) Für die Krafteinleitung bei Blattfedern aus Faserverbundwerkstoff sind an wengistens einem Federende (1) ein Federaugenkörper (2) und ein Klemmelement (3) vorgesehen. Das Klemmelement umschlingt den Federaugenkörper und liegt mit seinen Endabschnitten (4, 5) an den entsprechenden Flächen (6, 7) des Federendes an. Die Endabschnitte des Klemmelementes werden durch Befestigungsmittel (10) mit dem Federende verspannt. Zwecks Erzielung einer dauerhaften und zuverlässigen Verbindung zwischen Klemmelement und Federende sind deren aneinanderliegende Flächen (6, 8) und/oder (7, 9) insgesamt nicht-eben und zumindest annähernd komplementär zueinander ausgebildet.

FIG.2

## BLATTFEDER AUS FASERVERBUNDWERKSTOFF

Die Erfindung betrifft eine Blattfeder aus Faserverbundwerkstoff, insbesondere für die Radaufhängung eines Kraftfahrzeuges, entsprechend dem Oberbegriff des Anspruchs 1.

Eine Blattfeder dieser Art ist aus der EP-B-0 070 12 bekannt. Dabei sind die Federaugenkörper zum Anschluß an ein aufgehängtes oder nicht-aufgehängtes Bauteil in entsprechenden Ausnehmungen an den Federenden angebracht und jeweils mit Hilfe eines den Federaugenkörper umschlingenden Klemmelements an den Endabschnitten der Feder befestigt. Die kraftschlüssige Verbindung des Klemmelementes mit der Feder erfolgt durch mechanische Befestigungsmittel, wie Spannhülsen oder Durchgangsschrauben, die jedoch nur im äußeren Bereich des Federendes, d.h. im Bereich niedriger Biegespannungen vorgesehen werden können. In stark biegebelasteten Bereichen der Feder sind jedoch die für Spannhülsen und Durchgangsschrauben zwangsläufig erforderlichen Bohrungen häufig Ausgangspunkt von Laminatrissen. Darüber hinaus hängt die Reibkraft zwischen dem Federkörper und dem Klemmelement im wesentlichen von der Vorspannkraft der Befestigungsmittel ab. Ein Relaxieren des Faserverbundwerkstoffes führt im allgemeinen zu einer Verringerung der Haltekraft, so daß sich die Verbindung zwischen dem metallischen Klemmelement und dem Federkörper lockert. Bei dynamischer Belastung der Blattfeder ergeben sich Relativbewegungen zwischen dem Federaugenkörper und der Feder und damit nicht kontrollierbare Kraftumlagerungen sowie erhöhter Verschleiß.

Mit der Erfindung soll eine Blattfeder aus Faserverbundwerkstoff mit einer Befestigungseinrichtung an wenigstens einem Federende geschaffen werden, die leicht herstellbar und mit Hilfe eines Klemmelements einfach zu montieren ist.

Zur Lösung dieser Aufgabe werden die Maßnahmen nach dem Kennzeichen des Anspruchs 1 vorgeschlagen.

Erfindungsgemäß werden das Federende und das den Federaugenkörper umschlingende Klemmelement formschlüssig miteinander verbunden. Dieses geschieht dadurch, daß aneinanderliegende Flächen des Endabschnitts des Klemmelementes und des Federendes ingesamt nicht-eben und zumindest annähernd komplementär zueinander ausgebildet sind und durch eine mechanische Verbindung, beispielsweise durch zwei Schrauben gegenseitig fixiert werden. Mit anderen Worten, die aneinanderliegenden Flächen von Federende· und Klemmelement weisen einen Absatz auf, d.h. das Federende besitzt eine Aufdickung, oder sind mehrfach abgesetzt, d.h. mäanderförmig gestaltet.

Die Profilierung am Federende läßt sich bereits beim Herstellen des Federkörpers anformen, wobei der Bereich der Aufdickung(en) einen, verglichen mit dem übrigen Federkörper, höheren Harzanteil aufweist. Bei der Herstellung der Feder ist also im Aufdickungsbereich kein zusätzliches Material vorzusehen. Das Auffüllen des Volumens erfolgt durch in Faserrichtung fließendes Matrixharz, welches beim Preßvorgang aus dem Faser-Matrixverbund ausgetrieben wird.

Der Federaugenkörper sowie das zu seiner Befestigung am Federende vorgesehene Klemmelement bestehen im allgemeinen aus einem metallischen Werkstoff, zweckmäßigerweise aus einer Aluminiumlegierung. Federaugenkörper und Klemmelement können gegebenenfalls auch eine Baueinheit bilden und seitlich auf das Federende aufgeschoben werden.

Nach einem weiteren Merkmal der Erfindung weist das Federende eine oder mehrere, sich über die Federbreite oder einen Teil der Federbreite erstreckende, im Querschnitt trapezförmige oder kreisbogenförmige Erhebung(en) auf. Diese auf einer Seite der Feder und zwar auf der Druckseite ausgebildeten Erhebungen bieten sich dann an, wenn in ihrem Bereich hohe Biegespannungen vorliegen. Das Federende kann aber auch auf beiden, mit den Endabschnitten des Klemmelements korrespondierenden Flächen Erhebungen aufweisen, so daß eine zweifache formschlüssige Verbindung entsteht. Dabei können die Befestigungsmittel sowohl im Bereich der Erhebungen als auch vor den Erhebungen auf der dem Federaugenkörper abgelegenen Seite vorgesehen sein.

Die Erfindung wird nachfolgend unter Hinweis auf die Zeichnung anhand zweier Ausführungsbeispiele erläutert.

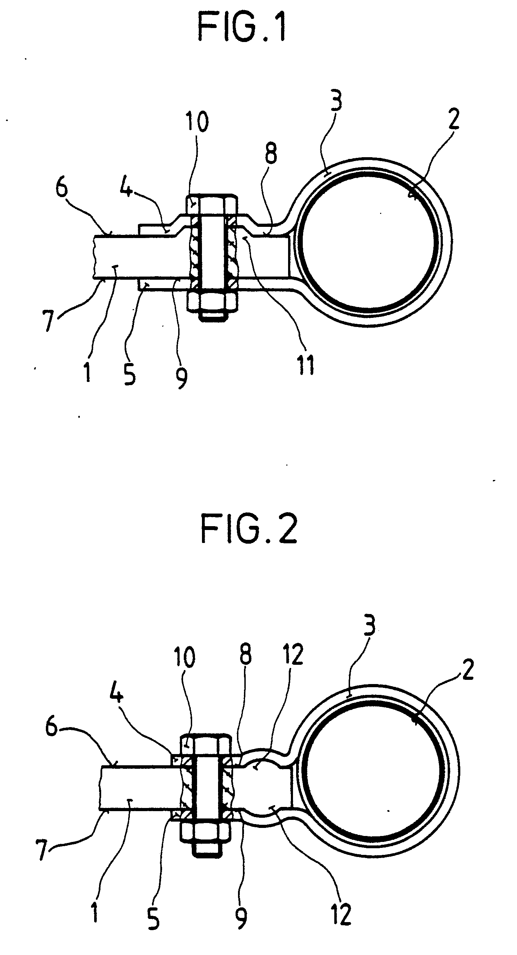

Gemäß Figur 1 ist die Feder aus Faserverbundwerkstoff bzw. das Federende mit (1) bezeichnet. An der Stirnseite der Feder ist ein Federaugenkörper (2) vorgesehen, welcher mit Hilfe eines Klemmelementes (3) und zweier Durchgangsschrauben (10) am Federende befestigt ist. Hierzu umschlingt das Klemmelement den Federaugenkörper und seine Endabschnite (4, 5) liegen mit ihren inneren Flächen (8, 9) an den entsprechenden Flächen (6, 7) des Federendes an. Auf der Druckseite der Feder, d.h. auf der Fläche (6) ist eine im Querschnitt trapezförmige Erhebung (11) ausgebildet. Die innere Fläche (8) des Endabschnitts (4) des Klemmelements (3) besitzt eine zu dieser Erhebung komplementäre Ausnehmung. Die Durchgangsschrauben (10), von denen nur eine sichtbar ist, sind im Bereich der Erhebung (11) angebracht.

Bei der in Figur 2 gezeigten Ausführungsform ist sowohl auf der Druckseite als auch auf der Zugseite der Feder (1), d.h. auf den Flächen (6) und (7) jeweils eine, sich über die gesamte Federbreite erstreckende Erhebung (12) vorgesehen. Die Erhebungen sind im Querschnitt kreisbogenförmig ausgebildet und zwischen dem Federaugenkörper (2) und den Durchgangsschrauben (10) angebracht. Die inneren Flächen (8, 9) der Endabschnitte (4, 5) des Klemmelementes (3) sind entsprechend geformt.

## Ansprüche

1. Blattfeder aus Faserverbundwerkstoff, insbesondere für die Radaufhängung eines Kraftfahrzeuges, mit einem Federaugenkörper (2) an wenigstens einem Federende (1) und einem Klemmelement (3), welches den Federaugenkörper umschlingt und Endabschnitte (4, 5) aufweist, die an den entsprechenden Flächen (6, 7) des Federendes anliegen und durch Befestigungsmittel (10) daran gehalten werden, dadurch gekennzeichnet, daß die aneinanderliegenden Flächen (6, 8) bzw. (7; 9) eines oder beider Endabschnitte(s) (4, 5) des Klemmelementes (3) und des Federendes (1) insgesamt nicht-eben und zumindest annähernd komplementär zueinander ausgebildet sind.

2. Blattfeder nach Anspruch 1, dadurch gekennzeichnet, daß das Federende (1) eine oder mehrere, sich über die Federbreite oder einen Teil der Federbreite erstreckende, im Querschnitt trapezförmige oder kreisbogenförmige Erhebung(en) (11, 12) aufweist.

3. Blattfeder nach den Ansprüchen 1 und 2, dadurch gekennzeichnet, daß die Befestigungsmittel (10) im Bereich der Erhebungen (1) vorgesehen sind.

4. Blattfeder nach den Ansprüchen 1 und 2, dadurch gekennzeichnet, daß die Befestigungsmittel (10) vor den Erhebungen (12) auf der dem Federaugenkörper (2) abgelegenen Seite vorgesehen sind.

# FIG.1

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2167832 (GKN TECHNOLOGY LTD)<br>* Seite 1, Zeilen 98 - 125; Anspruch 1; Figur 1 * | 1 | F16F1/26<br>B60G11/12 |
| A | --- | 2, 3 | |
| Y | PATENT ABSTRACTS OF JAPAN<br>vol. 12, no. 83 (M-677)(2930) 16 März 1988,<br>& JP-A-62 224741 (TOYOTA MOTOR CORP.) 02 Oktober 1987,<br>* das ganze Dokument * | 1-4 | |
| Y | PATENT ABSTRACTS OF JAPAN<br>vol. 3, no. 105 (M-71) 05 September 1979,<br>& JP-A-54 79343 (TORAY K.K.) 25 Juni 1979,<br>* das ganze Dokument * | 1-4 | |
| Y | EP-A-0132074 (GKN TECHNOLOGY LTD)<br>* Seite 5, Zeile 37 - Seite 6, Zeile 15; Figuren 5, 6 * | 1-4 | |
| Y | US-A-4611793 (TOYOTA JIDOSHA K.K.)<br>* Figuren 1-10 * | 1-4 | RECHERCHIERTE SACHGEBIETE (Int. Cl.5) |
| A | WO-A-8702109 (GKN TECHNOLOGY LTD)<br>* Figuren 1-3, 6, 9 * | 1-3 | F16F<br>B60G |
| A | PATENT ABSTRACTS OF JAPAN<br>vol. 5, no. 43 (M-60)(715) 23 März 1981,<br>& JP-A-55 166536 (NIPPON HATSUJIYOU K.K.) 25 Dezember 1980,<br>* das ganze Dokument * | 1-3 | |
| A | EP-A-0092949 (RUBERY OWEN HOLDIGS LTD.)<br>* Figuren 3, 4 * | 1 | |

Der vorliegende Recherchenbericht wurde für alle Patentansprüche erstellt

| Recherchenort | Abschlußdatum der Recherche | Prüfer |
|---|---|---|
| DEN HAAG | 28 SEPTEMBER 1990 | TSITSILONIS L. |